(19) Europäisches Patentamt
European Patent Office
Office européen des brevets

(11) Publication number: **0 035 315**
**B1**

# (12) EUROPEAN PATENT SPECIFICATION

(45) Date of publication of patent specification: **14.03.84**

(51) Int. Cl.$^3$: **C 09 J 3/16**

(21) Application number: **81300088.2**

(22) Date of filing: **09.01.81**

## (54) Silicone adhesive formulations.

(30) Priority: **28.01.80 US 115980**

(43) Date of publication of application:
**09.09.81 Bulletin 81/36**

(45) Publication of the grant of the patent:
**14.03.84 Bulletin 84/11**

(84) Designated Contracting States:
**BE DE FR GB IT NL**

(56) References cited:
**DE - A - 2 017 826**
**DE - C - 941 090**
**FR - A - 2 307 860**
**GB - A - 767 797**
**GB - A - 832 037**
**US - A - 3 929 704**
**US - A - 4 016 328**

(73) Proprietor: **DOW CORNING CORPORATION**
**Midland Michigan 48640 (US)**

(72) Inventor: **Blizzard, John Donald**
**1000 N. Hampton**
**Bay City, Michigan 48706 (US)**

(74) Representative: **Lewin, John Harvey et al,**
**Elkington and Fife High Holborn House 52/54**
**High Holborn**
**London WC1V 6SH (GB)**

**EP 0 035 315 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Silicone adhesive formulations

The present invention relates generally to silicone adhesives and more particularly to improvements in physical properties, especially tack characteristics, of pressure sensitive silicone adhesives.

Silicone pressure sensitive adhesives are generally provided in commerce in a form comprising an admixture of a silicone polymer, a silicone resin, a suitable solvent and, optionally, additives such as viscosity stabilizers. Curing of such mixtures is by thermal and/or catalytic means. Among the more common silicone polymers employed are hydroxyl-endblocked siloxane gums containing dimethylsiloxane, diphenylsiloxane, methylvinylsiloxane and/or phenylmethylsiloxane units. By way of example, these gums can be formed by the reaction of dimethylsiloxane cyclic compounds with relatively low viscosity hydroxyl-endblocked polydimethylsiloxanes in the presence of a suitable catalyst such as potassium silanolate. Resins typically employed in silicone pressure sensitive adhesive formulations include trimethylsiloxy endblocked silicates providing about 2 percent silanol groups and having a ratio of trimethylsiloxy groups to $SiO_2$ groups of from about 0.4 to 1 to about 1.2 to 1 and preferably about 0.6 to 1. Solvents suitable for use in silicone pressure sensitive adhesives include aromatic solvents generally and preferably xylene. Additives for viscosity stabilization include isopropanol.

Formulations as described above provide a two phase system including a continuous, non-polar phase of polymer containing dissolved resin and a disperse, polar phase of resin containing dissolved polymer. The character of the continuous phase is generally acknowledged to provide for the cohesive properties of the adhesive while the disperse phase characteristics provide for the tack properties of the adhesive. Adhesive formulations, therefore, are selected to provide ratios of polymer to resin such as will generate acceptable balances between desired characteristics of cohesiveness and tack in the end product. Put another way, adhesive strength of the blends of polymer and resin forming a silicone pressure sensitive adhesive may be increased by increasing the resin content, but at the loss of tack properties.

By way of example, silicone pressure sensitive adhesive formulations generally are based upon a total combined weight of resin and polymer equalling 100 parts in a suitable solvent carrier, plus any of the conventional additives. In adhesive formulations projected for an end use wherein high tack characteristics are required, a relatively low weight ratio of resin to polymer is employed—on the order of 45 parts resin to 55 parts polymer. Formulations projected for end uses wherein exceptionally high adhesion characteristics are required will incorporate a relatively high ratio of resin to polymer—on the order of 75 parts resin to 25 parts polymer. The latter formulations are acknowledged to have rather poor tack characteristics when cured.

There exists in the art, therefore, a need for silicone pressure sensitive adhesive formulations that provide both the superior tack properties ordinarily associated only with those formulations having relatively low resin to polymer ratios as well as the strong adhesive characteristics ordinarily associated with formulations having relatively high resin to polymer ratios.

According to the present invention tack characteristics of a cured silicone pressure sensitive adhesive are enhanced by incorporating into adhesive formulations, prior to curing, a silicone cluster compound. This invention specifically relates to an improvement in a silicone pressure sensitive adhesive composition comprising 45 to 75 parts by weight of a silicone resin and 25 to 55 parts by weight of a silicone polymer, the improvement comprising adding to said composition 0.5 to 10 parts by weight, based on a total of 100 parts by weight of the resin and polymer, of a cluster compound

(A) $RSi\{OSi(OR')_3\}_3$

(B) $M\langle OSi\{OSi(OR')_3\}_3\rangle_a$

(C) $M\langle OSiR\{OSi(OR')_3\}_2\rangle_a$

or

(D) $$\{(R'O)_3SiO\}_2\overset{\overset{R''}{|}}{Si}(OSiR'''_2)(OSiR'''_2)_nO\overset{\overset{R''}{|}}{Si}\{OSi(OR')_3\}_2$$

wherein R is hydrogen, an alkyl, alkenyl, aryl or aralkyl group, R' is hydrogen, an alkyl, alkenyl, aryl or aralkyl group, with the proviso that at least a majority of the R' radicals are sterically hindered alkyl groups having at least 3 carbon atoms, M is a substituted or unsubstituted branched or straight chain hydrocarbon radical, a is 2, 3, or 4, n is an integer from 0 to 300, R'' is hydrogen, an alkyl, alkenyl, aryl, aralkyl or $—OSi(OR')_3$ group and R''' is hydrogen, an alkyl, alkenyl, aryl, aralkyl, hydroalkyl, and halo or cyano substituted alkyl, alkenyl, aryl, aralkyl and hydroalkyl. More specifically, the invention preferably provides for enhancing tack properties of pressure sensitive adhesives based on relatively high resin to polymer ratio formulations by adding to such formulations from 0.5 to 10 and preferably 1 to 5 parts by weight (based on a total of 100 parts by weight of resin and polymer) of a silicone cluster compound as

described above. Also provided according to the invention are formulations providing adhesives with good adhesive strength as well as good tack properties after heat aging by adding to the silicone pressure sensitive adhesive formulations such silicone cluster compounds. Preferred among the cluster compounds useful in practice of the invention are those alkoxysilicone cluster compounds of the above formula wherein R is methyl and each R′ secondary butyl.

The silicone cluster compounds suitable for use in practice of the invention include those described in, and prepared by the methods set forth in U.S. Letters Patent Nos. 3,965,136 issued June 22, 1976; 3,992,429 issued November 16, 1976; 4,058,546 issued November 15, 1977; and 4,077,993 issued March 7, 1978, all to Knollmeuller. The disclosures of these patents are hereby incorporated by reference. Such cluster compounds have the general formulae

$$RSi\{OSi(OR')_3\}_3$$

$$M\langle OSi\{OSi(OR')_3\}_3\rangle_a$$

$$M\langle OSiR\{OSi(OR')_3\}_2\rangle_a$$

and

$$\{(R'O)_3SiO\}_2\overset{R''}{\overset{|}{Si}}(OSiR'''_2)(OSiR'''_2)_nO\overset{R''}{\overset{|}{Si}}\{OSi(OR')_3\}_2$$

wherein R is hydrogen, an alkyl, alkenyl, aryl or aralkyl group, R′ is hydrogen, an alkyl, alkenyl, aryl or aralkyl group, with the proviso that at least a majority of the R′ radicals are sterically hindered alkyl groups having at least 3 carbon atoms, M is a substituted or unsubstituted branched or straight chain hydrocarbon radical, a is 2, 3, or 4, n is an integer from 0 to 300, R″ is hydrogen, an alkyl, alkenyl, aryl, aralkyl or $-OSi(OR')_3$ group, and R‴ is hydrogen, an alkyl, alkenyl, aryl, aralkyl, hydroalkyl, and halo or cyano substituted alkyl, alkenyl, aryl, aralkyl and hydroalkyl. Preferred cluster compounds for use in the invention are those wherein R is a methyl group and each R′ radical is a secondary butyl radical. Such preferred cluster compounds are presently commercially available from Olin Chemicals (Stamford, Connecticut) under the trade designation "Silicate Cluster 102" and "Silicate Cluster 2102".

According to one aspect of the invention, cluster compounds are cold mixed into uncured adhesive formulations containing a relatively high ratio of silicone resin to silicone polymer gum and which consequently, would be expected to provide cured adhesives possessing high adhesive strength but rather low tack characteristics. As employed herein, the term "relatively high resin to polymer ratio formulation" shall mean a silicone pressure sensitive adhesive formulation wherein the silicone resin component comprises from 45 to 75 (preferably 45 to 60) parts by weight and the silicone polymer gum component comprises from 25 to 55 (preferably 40 to 55) parts by weight in a formulation based on a total of 100 parts by weight of the resin plus polymer. It has been found that the addition of from about 0.5 to about 10 parts by weight cluster compound (based on 100 parts of the resin-polymer combination) to adhesives having a relatively high resin to polymer ratio formulation will allow for development of a cured adhesive material possessing high adhesive strength characteristics and high tack characteristics. The preferred quantity of cluster compound to add to such formulations is from about 1 to about 5 parts by weight and it is noted that additions of quantities in excess of 5 parts by weight provide only minimally greater enhancement of tack properties over and above that obtained by addition of about 5 parts by weight.

The uncured silicone adhesive formulations having improved tack characteristics after curing and heat aging are prepared by adding 0.5 to 10 parts by weight (based on 100 parts by weight of the resin polymer combination) of the cluster compounds as described above are added to the formulation.

The following examples are provided as illustrative of practice of the invention and are not intended to establish limits upon the invention as subsequently claimed. Quantitative tack measurements reported therein are performed through use of a Polyken™ brand Probe Tack Tester (Testing Machines, Inc., Amityville, NY). Briefly summarized, tack measurements, expressed in units of grams of tack, were obtained using a probe velocity of 0.5 cm/sec, a contact pressure of 100 grams/$cm^2$, and contact time of 0.5 seconds. Quantitative adhesion measurements reported therein were obtained through use of a 12.7 mm (one-half inch) wide aluminum or Teflon (Registered Trade Mark) tape which contained a 0.038 mm (1.5 mil) layer of cured adhesive. The tape was adhered to a stainless steel panel and stripped at a rate of 30.5 cm/min (12 inches/minute) at an angle of 180°, with the results expressed in g/mm (ounces per inch). The adhesion test corresponds to ASTM D-1000.

Example 1

A cold mix of the following general formulation was prepared: 27.4 parts by weight of a polydimethylsiloxane gum (prepared by reaction of 100 parts by weight dimethylsiloxane cyclic trimer with 0.40 parts by weight of a hydroxy-endblocked polydimethylsiloxane fluid having a viscosity of 60—70 centistokes and 0.24 parts by weight of a potassium silanolate catalyst); 29.7 parts by weight of a resinous trimethylsiloxy endblocked silicate providing about 2 percent silanol groups and having a ratio of trimethylsiloxygroups to $SiO_2$ groups of from about 0.4 to 1 to about 1.2 to 1 and incorporated

as a 70 percent solids xylene solution; 6.3 parts by weight of a hexamethyldisilazane-treated resinous silicate as previously noted (providing a maximum of about 0.4 percent silanol groups) and incorporated as a 60 percent solids xylene solution; 2.3 parts by weight isopropanol; 34.2 parts by weight xylene; and, 0.14 parts by weight of a reaction product of 115 parts by weight tetramethylguanidine and 144 parts by weight 2-ethylhexanoic acid in 1036 parts by weight xylene. The formulation thus obtained exemplifies an adhesive material having a relatively high resin to polymer ratio.

Example 2

Three 157 gram samples of the cold mix formation of Example 1 were separated for testing. Control, first and second test samples respectively had 0, 1 gram and 5 grams of the silicone cluster compound $RSi[OSi(OR')_3]_3$, wherein R is a methyl group and R′ is a secondary butyl group, added with mixing prior to mixing with 1 part by weight benzoyl peroxide and coating on aluminum or Teflon® strips. The coated compositions were cured by heat treatment at 70°C for fifteen minutes and then 150°C for five minutes. Adhesion test measurements with aluminum strips for control, first and second test samples provided values of 99 (89), 93 (83), and 89 (80) g/mm (ounces/inch) respectively. Tack measurements for control, first and second test samples were 236, 353 and 533, respectively. Accelerated aging of the aluminum coating samples was carried out by treatment at 250°C for 24 hours. Adhesion testing results for the control, first and second test samples so aged were 76 (68), 78 (70) and 78 (70), respectively, while tack testing results for the control and second test samples were 140 and 330, respectively. Tack measurements with Teflon® coated strips for the control, first and second test samples were 333, 520 and 580 respectively. Accelerated aging (250°C for 24 hours) of the coated Teflon® strips was effected and tack measurements of 180, 500 and 410, respectively, where obtained.

The above example indicates not only substantial improvements in tack accompanying the addition of the cluster compound, but some evidence of enhancement of heat stability of the cured adhesive composition as well.

Example 3

A test was conducted to ascertain the effects on adhesion over long-term aging of adhesive formulations at room temperature. Four 50 gram samples of an adhesive formulation prepared according to Example 1 where separated for testing. To control, first, second and third samples were added respectively 0, 0.3, 1.5, and 3.6 grams of the preferred methyl, secondary butyl cluster compound used in Example 2. After being mixed with one percent benzoyl peroxide, coated on aluminum or Teflon® and cured with heat treatment of fifteen minutes at 70°C and five minutes at 150°C, adhesion values were determined for aluminum and Teflon® strips and the strips then stored at room temperature. Adhesion values were also determined at various intervals thereafter. The results of the tests are set forth in Table 1 below and indicate no substantial adverse effects of the cluster compounds on long term adhesion characteristics.

TABLE 1

Adhesion—g/mm (ounces/inch)

| Aluminum strips Aging | Control | First sample | Second sample | Third sample |
|---|---|---|---|---|
| 0 (Initial) | 98 (88) | 98 (88) | 94 (84) | 71 (64) |
| 3 days | 105 (94) | 100 (90) | 96 (86) | 69 (62) |
| 7 days | 107 (96) | 107 (96) | 103 (92) | 69 (62) |
| 14 days | 112 (100) | 112 (100) | 87 (78) | 74 (66) |
| 1 month | 107 (96) | 112 (100) | 85 (76) | 67 (60) |
| 2 months | 107 (96) | 100 (90) | 78 (70) | 64 (57) |
| 3 months | 112 (100) | 93 (83) | 89 (80) | 66 (59) |
| 6 months | 94 (84) | 112 (100) | 80 (72) | 74 (66) |
| 15 months | 85 (76) | 92 (82) | 80 (72) | 66 (59) |

TABLE 1 (contd.)

| Teflon® strips Aging | Tack—grams Control | First sample | Second sample | Third sample |
|---|---|---|---|---|
| 0 (Initial) | 460 | 667 | 787 | 770 |
| 3 days | 400 | 740 | 840 | 805 |
| 7 days | 340 | 687 | 823 | 826 |
| 14 days | 420 | 750 | 660 | 810 |
| 1 month | 350 | 740 | 620 | 760 |
| 2 months | 310 | 770 | 760 | 750 |
| 3 months | 380 | 750 | 810 | 790 |
| 6 months | 370 | 580 | 820 | 760 |
| 15 months | 685 | 713 | 697 | 740 |

Example 4

To a 164 gram sample of the formulation of Example 1 there was added 3 grams of the silicone cluster compound

$$M\langle OSiR\{OSi(OR')_3\}_2\rangle_a$$

wherein R is a methyl group, R′ is a secondary butyl group, a is 2 and M is $-CH_2C(CH_3)_2CH_2-$, with mixing prior to curing with 1% by weight of benzoyl peroxide for fifteen minutes at 70°C followed by five minutes at 150°C. In the adhesion test on aluminum a value of 92 (82) was obtained while in the tack test on Teflon® a value of 680 was obtained.

As noted previously, it has been found that additions of from 0.5 to 10 parts by weight of cluster compound per 100 parts of resin plus polymer in an uncured adhesive formulation result in substantial enhancement of tack characteristics of the cured adhesive. It is preferred, however, that additions of cluster compound be within the range of from about 3 to about 5 parts by weight inasmuch as enhancement of tack ceases to be significant after levels of more than about 5 parts by weight have been reached. It should also be found that additions of the cluster compound do not appear to require any unusual processing steps other than simple mixing and that the usual range of catalyst (e.g., from 0.5 to 4 weight percent benzoyl peroxide based on solids content of the formulation) may be employed satisfactorily to cure the formulations to which the cluster compound has been added.

Consistent with the above description of addition of the cluster compounds to existing formulations having a relatively high resin to polymer ratio is that aspect of the invention which provides for the addition of the cluster compound to silicone pressure sensitive adhesive formulations which may be subjected to heat aging to enhance their tack characteristics. It is believed that from about 0.5 to about 10 parts by weight, based on 100 parts of the combined weights of the resin and polymer, of the cluster compounds will result in cured adhesives having enhanced tack as well as good adhesion properties. It is preferred that from about 3 to about 5 parts of the cluster compound be used.

It will be apparent from the above that practice of the invention allows for both the development of high tack, highly adhesive silicone pressure sensitive adhesives as well as modification, prior to curing, of existing formulations which would ordinarily be expected to form highly adhesive cured products having low tack characteristics. The latter aspect is of substantial commercial significance because it allows the end user to stock supplies of adhesive formulations generating highly adhesive cured produces but to modify such formulations to develop aggressively tacky cured adhesives on a small scale and as desired for particular end use.

Modifications and variations of the invention as above described are expected to occur to those skilled in the art upon consideration of the foregoing description and consequently only such limitations as appear in the appended claims should be placed on the invention.

## Claims

1. A silicone pressure sensitive adhesive composition comprising 45 to 75 parts by weight of a silicone resin and 25 to 55 parts by weight of a silicone polymer gum, characterized in that it further comprises 0.5 to 10 parts by weight, based on a total of 100 parts by weight of the resin and polymer gum, of a cluster compound

(A) $RSi\{OSi(OR')_3\}_3$

(B) $M\langle OSi\{OSi(OR')_3\}_3\rangle_a$

(C) $M\langle OSiR\{OSi(OR')_3\}_2\rangle_a$

or

(D) $$\{(R'O)_3SiO\}_2\overset{R''}{\overset{|}{Si}}(OSiR'''_2)(OSiR'''_2)_nO\overset{R''}{\overset{|}{Si}}\{OSi(OR')_3\}_2$$

wherein

R is hydrogen, an alkyl, alkenyl, aryl or aralkyl group,

R' is hydrogen, an alkyl, alkenyl, aryl or aralkyl group with the proviso that at least a majority of the R' radicals are sterically hindered alkyl groups having at least 3 carbon atoms,

M is a substituted or unsubstituted branched or straight chain hydrocarbon radical,

a is 2, 3, or 4,

n is an integer from 0 to 300,

R'' is hydrogen, an alkyl, alkenyl, aryl, aralkyl or $—OSi(OR')_3$ group, and

R''' is hydrogen, an alkyl, alkenyl, aryl, aralkyl, hydroalkyl, halo or cyano substituted alkyl, alkenyl, aryl, aralkyl, or hydroalkyl group.

2. A pressure sensitive adhesive as defined in claim 1, wherein 1 to 5 parts by weight of the cluster compound are employed.

3. A pressure sensitive adhesive as defined in claim 1 or 2, comprising 45 to 60 parts by weight of the silicone resin and 40 to 55 parts by weight of the silicone polymer gum.

4. A pressure sensitive adhesive as defined in claim 2, wherein the cluster compound has formula (A) and R is a methyl group and each R' is a secondary butyl group.

5. A pressure sensitive adhesive as defined in claim 2, wherein the cluster compound has formula (C) and R is a methyl group, each R' is a secondary butyl group, a is 2, and M is a $—CH_2C(CH_3)CH_2—$ radical.

**Patentansprüche**

1. Ein druckempfindliche Silikon-Klebstoff-Zusammensetzung enthaltend 45 bis 75 Gewichtsteile eines Silikonharzes und 25 bis 55 Gewichtsteile eines polymeren Silikongummis, dadurch gekennzeichnet, daß sie Zusätzligh enthält 0,5 bis 10 Gewichtsteile, bezogen auf die Gesamtmenge von 100 Gewichtsteilen des Harzes und des polymeren Gummis, einer Clusterverbindung

(A) $RSi\{OSi(OR')_3\}_3$

(B) $M\langle OSi\{OSi(OR')_3\}_3\rangle_a$

(C) $M\langle OSiR\{OSi(OR')_3\}_2\rangle_a$

oder

(D) $$\{(R'O)_3SiO\}_2\overset{R''}{\overset{|}{Si}}(OSiR'''_2)(OSiR'''_2)_nO\overset{R''}{\overset{|}{Si}}\{OSi(OR')_3\}_2$$

wobei

R Wasserstoff, eine Alkyl-, Alkenyl-, Aryl- oder Aralkylgruppe ist,

R' Wasserstoff, eine Alkyl-, Alkenyl-, Aryl- oder Aralkylgruppe ist, mit der Bedingung, daß mindestens eine Mehrzahl der R'-Reste sterisch gehinderte Alkylgruppen mit mindestens 3 Kohlenstoffatomen sind,

M ein substituierter oder unsubstituierter verzweigter oder unverzweigter kettenförmiger Kohlenwasserstoffrest ist,

a 2, 3 oder 4 ist,

n eine ganze Zahl von 0 bis 300 ist,

R'' Wasserstoff, eine Alkyl-, Alkenyl-, Aryl-, Aralkyl- oder $—OSi(OR')_3$-gruppe ist und

R''' Wasserstoff, eine Alkyl-, Alkenyl-, Aryl-, Aralkyl-, Hydroalkyl-, halogen- oder cyansubstituierte Alkyl-, Alkenyl-, Aryl-, Aralkyl- oder Hydroalkylgruppe ist.

2. Ein druckempfindlicher Klebstoff gemäß Anspruch 1, dadurch gekennzeichnet, daß er 1 bis 5 Gewichtsteile der Clusterverbindung enthält.

3. Ein druckempfindlicher Klebstoff gemäß Anspruch 1 oder 2, dadurch gekennzeichnet, daß er 45 bis 60 Gewichtsteile des Silikonharzes und 40 bis 55 Gewichtsteile des polymeren Silikongummis enthält.

4. Ein druckempfindlicher Klebstoff gemäß Anspruch 2, dadurch gekennzeichnet, daß die Clusterverbindung die Formel (A) hat und R eine Methylgruppe ist und jedes R' eine sekundäre Butylgruppe ist.

5. Ein druckempfindlicher Klebstoff gemäß Anspruch 2, dadurch gekennzeichnet, daß die Clusterverbindung die Formel (C) hat und R eine Methylgruppe ist, jedes R' eine sekundäre Butylgruppe ist a 2 ist und M der Rest $—CH_2C(CH_3)CH_2—$ ist.

**Revendications**

1. Composition d'adhésif de silicone sensible à la pression comprenant 45 à 75 parties en poids d'une résine de silicone et 25 à 55 parties en poids d'une gomme de polymère de silicone, caractérisée en ce qu'elle comprend, en outre, 0,5 à 10 parties en poids, par rapoort à un total de 100 parties en poids de la résine et de la gomme de polymère, d'un composé en grappe:

(A) $RSi\{OSi(OR')_3\}_3$
(B) $M\langle OSi\{OSi(OR')_3\}_3\rangle_a$
(C) $M\langle OSiR\{OSi(OR')_3\}_2\}_a$
ou

(D) $\{R'O)_3SiO\}_2\overset{\overset{\displaystyle R''}{|}}{Si}(OSiR'''_2)(OSiR'''_2)_nO\overset{\overset{\displaystyle R''}{|}}{Si}\{OSi(OR')_3\}_2$

où
R est l'hydrogène ou un groupe alkyle, alkényle, aryle ou aralkyle,
R' est l'hydrogène ou un groupe alkyle, alkényle, aryle ou aralkyle avec la condition qu'au moins la majorité des radicaux R' soient des groupes alkyles stériquement empêchés ayant au moins trois atomes de carbone,
M est un radical d'hydrocarbure à chaîne ramifiée ou droite, substitué ou non substitué,
a est 2, 3 ou 4,
n est un nombre entier de 0 à 300,
R'' est l'hydrogène ou un groupe alkyle, alkényle, aryle, aralkyle ou $—OSi(OR')_3$, et
R''' est l'hydrogène ou un groupe alkyle, alkényle, aryle, aralkyle, hydroalkyle, ou un groupe alkyle, alkényle, aryle, aralkyle ou hydroalkyle halogéné ou cyané.

2. Adhésif sensible à la pression selon la revendication 1, dans lequel on utilise 1 à 5 parties en poids du composé en grappe.

3. Adhésif sensible à la pression selon la revendication 1 ou 2, qui comprend 45 à 60 parties en poids de résine de silicone et 40 à 55 parties en poids de gomme de polymère de silicone.

4. Adhésif sensible à la pression selon la revendication 2, dans lequel le composé en grappe a la formule (A) et R est un groupe méthyle et chaque R' est un groupe butyle secondaire.

5. Adhésif sensible à la pression selon la revendication 2, dans lequel le composé en grappe a la formule (C) et R est un groupe méthyle, chaque R' est un groupe butyle secondaire, a est 2 et M est un radical $—CH_2C(CH_3)_2CH_2—$.